# EUROPEAN PATENT APPLICATION

(11) **EP 4 851 576 A1**
(43) Date of publication of application: **09.12.2026**
(21) Application number: 26178413.6
(22) Date of filing: 13.05.2026
(51) Int. Cl.: G01B 21/04, G05B 19/401

(54) **WIRELESS COMMUNICATION APPARATUS AND MEASUREMENT SYSTEM**

(30) Priority: 03.06.2025 JP 2025092423
(71) Applicant: Mitutoyo Corporation, Kawasaki-shi, Kanagawa 213-8533 (JP)
(72) Inventor: HIDAKA, Kazuhiko, Kawasaki, Kanagawa, 213-8533 (JP); SHIMAOKA, Atsushi, Kawasaki, Kanagawa, 213-8533 (JP); FUJIKAWA, Kenichi, Kawasaki, Kanagawa, 213-8533 (JP)
(74) Representative: MERH-IP Matias Erny Reichl Hoffmann Patentanwälte PartG mbB

(57) **Abstract**

A wireless communication apparatus 2 according to the present embodiment includes: a first coupling portion B1 coupled to a measurement device 111 for measuring a workpiece W mounted on a measurement apparatus 1 having a function of controlling a position of a mounting portion 112 to which a device for measuring the workpiece W is detachably mounted; a second coupling portion B2 coupled to the mounting portion 112; a wired communication part 21 that receives control data for controlling the measurement device 111 from the measurement apparatus 1 via a cable connected to the second coupling portion B2, and a wireless communication part 22 that transmits one or more pieces of first measurement data among a plurality of pieces of measurement data output by the measurement device 111 on the basis of the control data via a wireless channel.

## Description

### BACKGROUND

The present disclosure relates to a wireless communication apparatus and a measurement system for measuring a workpiece which is an object to be measured.

Conventionally, a profile measurement apparatus is known in which a measuring machine body and a controller are connected to each other via a cable.

### SUMMARY

According to one aspect, a wireless communication apparatus including: a first coupling portion coupled to a measurement device for measuring a workpiece mounted on a measurement apparatus having a function of controlling a position of a mounting portion to which the device for measuring the workpiece is detachably mounted; a second coupling portion coupled to the mounting portion; a wired communication part that receives control data for controlling the measurement device from the measurement apparatus via a cable connected to the second coupling portion; and a wireless communication part that transmits one or more pieces of first measurement data among a plurality of pieces of measurement data output by the measurement device on the basis of the control data via a wireless channel.

### BRIEF DESCRIPTION OF THE DRAWINGS

FIG. 1 is a diagram for explaining an overview of a measurement system S.
FIG. 2 is a diagram illustrating an example of a configuration of a wireless communication apparatus 2.
FIG. 3 is a diagram illustrating an example of management data stored in a management apparatus 4.
FIG. 4 is a graph illustrating temperature control of a measurement device 111.
FIG. 5 is a flowchart showing an example of a processing flow executed in the measurement system S.

### DETAILED DESCRIPTION

### [Overview of a measurement system S]

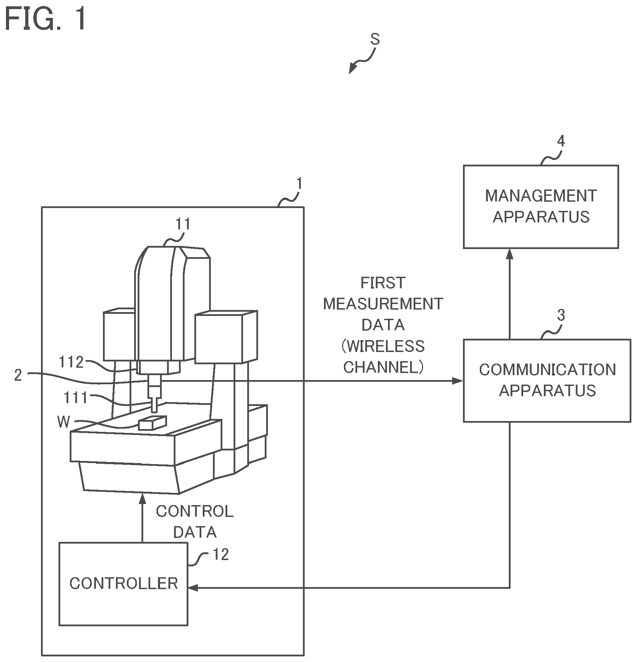

FIG. 1 is a diagram for explaining an overview of a measurement system S. The measurement system S includes a measurement apparatus 1, a wireless communication apparatus 2, a communication apparatus 3, and a management apparatus 4. The measurement apparatus 1 includes a main body 11 and a controller 12. The main body 11 includes a measurement device 111 and a mounting portion 112. The measurement system S is a system for measuring a workpiece W, which is an object to be measured placed on the main body 11, by using the measurement device 111.

In the measurement apparatus 1, the measurement data output by the measurement device 111 may be transmitted to the controller 12 via a signal line. In such a case, the greater the number of signal lines, the greater the number of types of measurement data that the measurement apparatus 1 can use for measurement. However, when an additional type of measurement data is desired to be measured, the number of already installed signal lines may be insufficient. As a result, there has been a problem in that the additional type of measurement data desired to be measured cannot be transmitted from the measurement device 111 to the controller 12 because additional signal lines cannot be installed, or modification of the measurement apparatus 1 becomes necessary to add signal lines, thereby increasing cost and labor.

Accordingly, the measurement system S is configured such that, by attaching the wireless communication apparatus 2 to the existing measurement apparatus 1, measurement data output by the measurement device 111 can be wirelessly transmitted to the controller 12. In this way, when an additional type of measurement data is desired to be measured, it is not necessary to add a signal line connecting the measurement apparatus 1 and the controller 12, thereby facilitating the addition of types of measurement data that the measurement apparatus 1 can use for measurement.

The main body 11 has a function of controlling a position of the mounting portion 112 to which a device for measuring the workpiece W is detachably mounted, and is, for example, an existing machine tool apparatus or an existing coordinate measuring machine. The measurement device 111 is a device for measuring the workpiece W placed on the main body 11, and is, for example, a geometry sensor for measuring a geometry of the workpiece W, a vibration sensor that detects vibration of an object, a temperature sensor that measures a temperature of an object, or an angular velocity sensor (gyro sensor) that detects rotation or orientation of an object, or the like. One measurement device 111 may have functions of a plurality of these sensors.

The measurement device 111 may be a non-contact sensor that measures the workpiece W without contacting the workpiece W, or may be a contact sensor that measures the workpiece W by contacting a probe or the like with the workpiece W. The measurement device 111 may process the workpiece W. The mounting portion 112 is configured to allow the measurement device 111 to be replaced and mounted, and is, for example, a rotation mechanism such as a tool holder or a probe head.

The controller 12 is a computer for controlling the main body 11. The controller 12 causes a display to display an operation screen for a user of the main body 11 to select an operation mode, and transmits control data to the main body 11 to cause the main body 11 to operate in the selected operation mode.

Specifically, the controller 12 moves a device corresponding to the operation mode by transmitting control data for replacing a device mounted on the mounting portion 112 to the main body 11 or transmitting control data for moving the position of the mounting portion 112 to the main body 11. The controller 12 may continuously cause the mounting portion 112 to move during the measurement period, or may alternately cause the mounting portion to move and stop.

The wireless communication apparatus 2 is a device capable of transmitting one or more pieces of first measurement data among a plurality of pieces of measurement data output by the measurement device 111 via a wireless channel. As illustrated in FIG. 1, the wireless communication apparatus 2 can be coupled to a measurement device 111 included in the existing measurement apparatus 1, and can also be coupled to the mounting portion 112 included in the existing measurement apparatus 1. That is, the wireless communication apparatus 2 can be mounted between the measurement device 111 and the mounting portion 112 in the measurement apparatus 1. The shape of the wireless communication apparatus 2 is not particularly limited as long as it is a shape that can be coupled to the measurement device 111 and the mounting portion 112, and is, for example, cylindrical.

Enabling the wireless communication apparatus 2 having a wireless communication function to be coupled to the existing measurement apparatus 1 in this manner eliminates the need to add a signal line connecting the measurement apparatus 1 and the controller 12 when the user wishes to add types of measurement data that the measurement apparatus 1 can use for measurement. As a result, it becomes easier to increase the number of types of measurement data that the measurement apparatus 1 can use for measurement.

The communication apparatus 3 is an apparatus that functions as a so-called relay device that receives measurement data from the wireless communication apparatus 2 and transmits the received measurement data to the controller 12 or the management apparatus 4. Through installation of the communication apparatus 3, a stable communication environment can be established even when the distance between the measurement apparatus 1 and the management apparatus 4 is large. One communication apparatus 3 may be installed for one measurement apparatus 1 or for a plurality of measurement apparatuses 1. The wireless communication apparatus 2 may directly transmit the measurement data to the controller 12 or the management apparatus 4 without passing the measurement data through the communication apparatus 3.

The management apparatus 4 is an apparatus for managing the plurality of measurement apparatuses 1, and is capable of communicating with the plurality of measurement apparatuses 1. The management apparatus 4 is, for example, a server that manages a plurality of pieces of measurement data corresponding to each of the plurality of measurement apparatuses 1, a monitoring apparatus that performs preventive maintenance monitoring of the plurality of measurement apparatuses 1, or an apparatus having both a function of managing a plurality of pieces of measurement data and a function of performing preventive maintenance monitoring. Hereinafter, the configuration and operation of the wireless communication apparatus 2 will be described in detail.

### [Configuration and operation of the wireless communication apparatus 2]

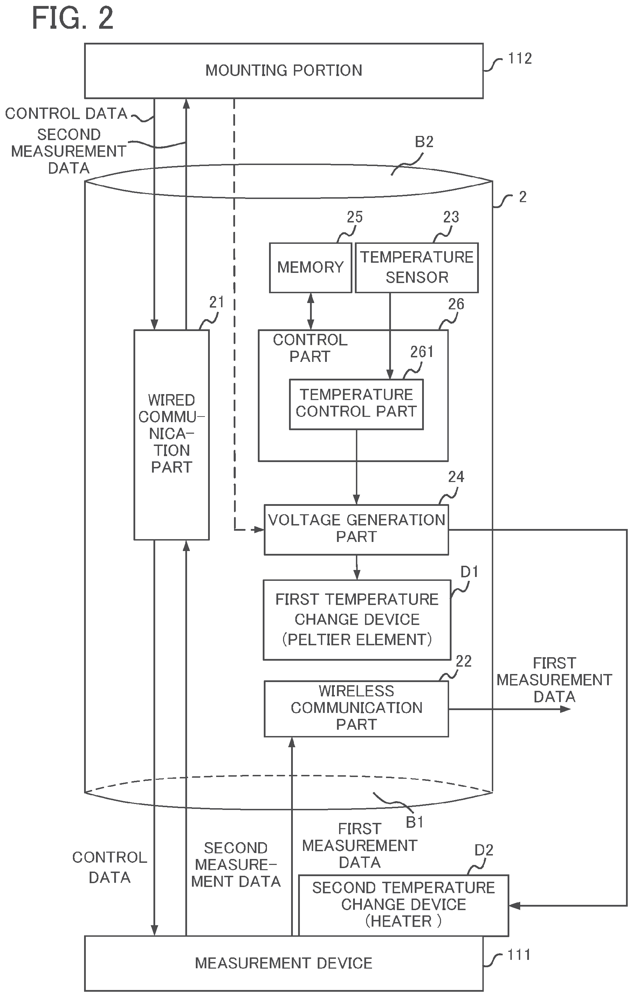

FIG. 2 is a diagram illustrating an example of a configuration of the wireless communication apparatus 2. The wireless communication apparatus 2 includes a first coupling portion B1, a second coupling portion B2, a wired communication part 21, a wireless communication part 22, a temperature sensor 23, a voltage generation part 24, a memory 25, a control part 26, and a first temperature change device D1. The control part 26 includes a temperature control part 261.

The first coupling portion B1 is a portion configured to couple to the measurement device 111 of the main body 11. The shape of the first coupling portion B1 may be any shape as long as it can be coupled to the measurement device 111. The first coupling portion B1 may have an opening for passing a cable for supplying power from the main body 11 or the wireless communication apparatus 2 to the measurement device 111. In addition, the first coupling portion B1 may include an opening for passing a cable for transmitting and receiving data between the wireless communication apparatus 2 and the measurement device 111.

The second coupling portion B2 is a portion configured to couple to the mounting portion 112 of the main body 11. The shape of the second coupling portion B2 may be any shape as long as it can be coupled to the mounting portion 112. The second coupling portion B2 may include an opening for passing a cable for supplying power from the main body 11 to the wireless communication apparatus 2. In addition, the second coupling portion B2 may have an opening for passing a cable for transmitting and receiving data between the main body 11 and the wireless communication apparatus 2.

The wired communication part 21 is a communication interface that transmits and receives data in a wired manner via a cable. The wired communication part 21 receives control data for controlling the measurement device 111 from the main body 11 via a cable connected to the second coupling portion B2. The wired communication part 21 transmits the control data received from the main body 11 to the measurement device 111 via a cable connected to the first coupling portion B1.

The wireless communication part 22 is a communication interface that transmits and receives data via a wireless channel. The wireless communication part 22 receives one or more pieces of first measurement data among a plurality of pieces of measurement data output by the measurement device 111 on the basis of the control data. The wireless communication part 22 may receive one or more pieces of first measurement data via a cable. The wireless communication part 22 transmits the received one or more pieces of first measurement data via a wireless channel. The wireless communication part 22 may transmit the received one or more pieces of first measurement data to the communication apparatus 3 having a relay function, may directly transmit the received one or more pieces of first measurement data to the controller 12, or may directly transmit the received one or more pieces of first measurement data to the management apparatus 4.

As described above, the wireless communication part 22 included in the wireless communication apparatus 2 that can be coupled to the existing measurement apparatus 1 can transmit the measurement data output by the measurement device 111 via the wireless channel. This eliminates the need to add a signal line connecting the measurement apparatus 1 and the controller 12 when the user wishes to add types of measurement data that the measurement apparatus 1 can use for measurement. As a result, it becomes easier to increase the number of types of measurement data that the measurement apparatus 1 can use for measurement.

Note that when a plurality of types of measurement data are to be added, the wireless communication part 22 may transmit each of the plurality of types of measurement data via different wireless channels. By using separate wireless channels in this manner, radio interference can be prevented, thereby improving the speed and stability of wireless communication.

As described above, the wireless communication apparatus 2 can transmit the first measurement data via wireless communication, but may transmit second measurement data different from the first measurement data via wired communication. The wired communication part 21 transmits, to the main body 11, one or more pieces of second measurement data different from the one or more pieces of first measurement data among the plurality of pieces of measurement data, for example, via the cable passing through the second coupling portion B2. Accordingly, the second measurement data (for example, geometry data indicating the geometry of the workpiece W) for which transmission in a stable communication environment is desirable due to reasons such as a need to acquire data at short intervals or a large data volume, can be transmitted via wired communication, which has higher communication stability than wireless communication. As a result, the workpiece W can be measured more smoothly.

As one example, the wired communication part 21 may transmit one or more pieces of second measurement data indicating the geometry of the workpiece W measured by the geometry sensor to the main body 11 via a cable. On the other hand, the wireless communication part 22 may transmit one or more pieces of first measurement data indicating the vibration detected by the vibration sensor or one or more pieces of first measurement data indicating the temperature measured by the temperature sensor, via a wireless channel. By the wired communication part 21 and the wireless communication part 22 operating in this manner, main data, such as geometry data indicating the geometry of the workpiece W, is transmitted via wired communication having high stability, whereas auxiliary data, such as vibration data indicating vibration or temperature data indicating temperature, is transmitted via wireless communication without adding a signal line.

Note that the wireless communication part 22 may transmit all of the plurality of types of measurement data including the first measurement data and the second measurement data via the wireless channel. By configuring the wireless communication part 22 to transmit all of the plurality of types of measurement data without using wired communication, a wired line for transmitting the measurement data output by the measurement device 111 becomes unnecessary. As a result, the cost for introducing the measurement apparatus 1 can be reduced, and the operation of the measurement apparatus 1 becomes smoother.

In order to accurately measure the workpiece W, the first measurement data and the second measurement data are preferably associated with control data. Therefore, the wireless communication part 22 may associate the first measurement data initially received from the measurement device 111 after the transmission of the control data to the measurement device 111 with the transmitted control data. The wired communication part 21 may associate the second measurement data initially received from the measurement device 111 after the transmission of the control data to the measurement device 111 with the transmitted control data. In this way, the control data, the first measurement data, and the second measurement data can be associated. The management apparatus 4 manages a measurement result of the workpiece W on the basis of one or more pieces of the first measurement data and one or more pieces of the second measurement data that are transmitted from the plurality of measurement apparatuses 1.

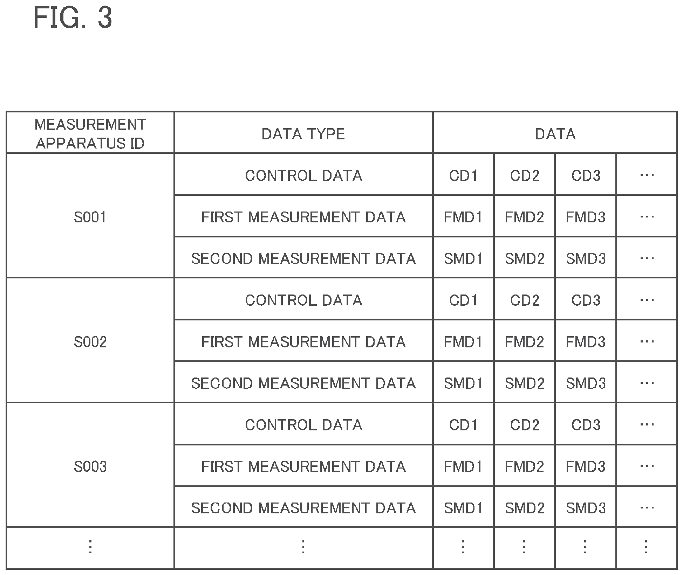

FIG. 3 is a diagram illustrating an example of management data stored in the management apparatus 4. In the management data, a measurement apparatus ID, data type, and data are associated with each other. Specifically, in the management data, control data, first measurement data, and second measurement data are associated with each measurement apparatus 1 of the plurality of measurement apparatuses 1. By referencing the management data, the management apparatus 4 can transmit an alert indicating the measurement apparatus 1 having abnormal measurement data to an administrator's terminal, and can also transmit measurement data to be analyzed by an analysis operator to the analysis operator's terminal.

If the measurement environment is not in a state suitable for measurement (for example, if the temperature of the measurement device 111 or the workpiece W is not at the temperature suitable for measurement), appropriate measurement data may not be obtained even if the workpiece W is measured. Therefore, the wireless communication part 22 may transmit one or more pieces of first measurement data via the wireless channel before the measurement device 111 starts measurement of the workpiece W. Then, when a value indicated by the transmitted one or more pieces of first measurement data satisfies a first condition, the controller 12 may transmit control data for instructing the measurement device 111 to start measurement of the workpiece W to the wired communication part 21.

The first condition is, for example, a condition indicating that the measurement environment is in a state in which the measurement device 111 may start measurement of the workpiece W. When the one or more pieces of first measurement data are the temperature data indicating the temperature of the measurement device 111 or the workpiece W, the first condition is a condition that the temperature is equal to or higher than a threshold value, that temperatures at a plurality of time points fall within a predetermined range (i.e., the temperature is stable), or the like. The controller 12 may store the first condition in association with the type of the measurement device 111 or the type of the workpiece W.

The wired communication part 21 receives the control data transmitted by the main body 11, and transmits the received control data to the measurement device 111. Accordingly, the measurement device 111 can output the measurement data on the basis of the control data when the measurement environment is in the state suitable for measurement. As a result, appropriate measurement data can be obtained.

The temperature control part 261 may control the temperature of the measurement device 111 to reduce the time required for the temperature of the measurement device 111 to reach the temperature suitable for measurement. Returning to FIG. 2, the voltage generation part 24 includes a circuit that generates a voltage applied to a temperature change device that changes the temperature of an object. The voltage generation part 24 generates the voltage on the basis of, for example, electric power supplied by a power source included in the main body 11 (indicated by a broken-line arrow in FIG. 2) or electric power supplied by a battery (not shown) included in the wireless communication apparatus 2. The battery may be a disposable type or a rechargeable type.

The wireless communication apparatus 2 may be stored in a mounting apparatus capable of automatically mounting the wireless communication apparatus 2 to the main body 11. This saves the user the effort of attaching the wireless communication apparatus 2 to the main body 11. The mounting apparatus may include a charging port for supplying electric power to the battery included in the wireless communication apparatus 2. Accordingly, while the wireless communication apparatus 2 is not attached to the main body 11 (i.e., not in use), the battery can be charged with electric power necessary to operate the wireless communication apparatus 2.

The memory 25 is a storage medium including a read only memory (ROM), a random access memory (RAM), and the like. The memory 25 stores a program executed by the control part 26. For example, the memory 25 stores a program that causes the control part 26 to function as the temperature control part 261.

The control part 26 is, for example, a CPU (Central Processing Unit). The control part 26 functions as the temperature control part 261 by executing the program stored in the memory 25.

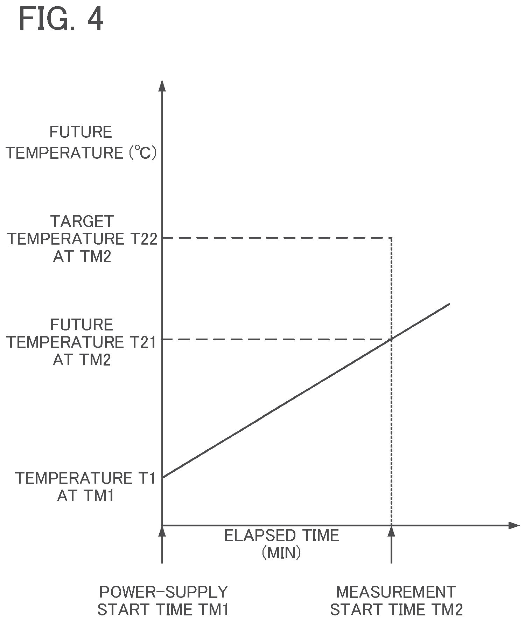

FIG. 4 is a graph illustrating temperature control of the measurement device 111. The temperature control part 261 estimates a future temperature of the measurement device 111 on the basis of electric power supplied to the measurement device 111. For example, the temperature control part 261 identifies a standard temperature rise, which is a temperature rise of the measurement device 111 in a case where electric power is supplied to the measurement device 111 for a standby time obtained by subtracting a power-supply start time TM1 from a measurement start time TM2. Then, for example, the temperature control part 261 estimates a future temperature T21 at the measurement start time TM2 by adding the identified standard temperature rise to a temperature T1 of the measurement device 111 at the start time TM1 measured by a temperature sensor (not shown) that measures the temperature of the measurement device 111.

The temperature control part 261 controls the temperature of the measurement device 111 on the basis of the estimated future temperature so that the temperature of the measurement device 111 reaches a target temperature within a predetermined time. For example, the temperature control part 261 controls the temperature of the measurement device 111 so that the temperature of the measurement device 111 rises within the standby time, in addition to the above-mentioned standard temperature rise, by a temperature difference obtained by subtracting the estimated future temperature T21 at the measurement start time TM2 from a target temperature T22 at the measurement start time TM2. The temperature control part 261 may cause the voltage generation part 24 to generate a voltage so that a second temperature change device D2 (see FIG. 2) can generate heat necessary to raise the temperature of the measurement device 111 by the temperature difference within the standby time. The second temperature change device D2 is, for example, a heat source such as a heater.

Accordingly, the voltage generation part 24 starts to apply the voltage to the second temperature change device D2, whereby the second temperature change device D2 increases the temperature of the measurement device 111 to the target temperature T22. As described above, the temperature control part 261 controls the temperature of the measurement device 111, thereby reducing the time required for the temperature of the measurement device 111 to reach the temperature suitable for measurement. As a result, the time required for measurement preparation can be reduced.

The value of measurement data output by the measurement device 111 while the measurement device 111 is stopped may be the same as the value of immediately preceding measurement data. When measurement data having the same value as the value of the immediately preceding measurement data is transmitted, the power consumption of the wireless communication apparatus 2 may increase, or the data volume of measurement data managed by the management apparatus 4 may increase.

Therefore, the wired communication part 21 may transmit the control data received from the main body 11 to the measurement device 111. The wireless communication part 22 may transmit, via the wireless channel, one or more pieces of first measurement data that are received from the measurement device 111 after the wired communication part 21 transmits the control data to the measurement device 111. For example, the wireless communication part 22 transmits, via a wireless channel, one or more pieces of first measurement data that are received from the measurement device 111 within a predetermined time (for example, several milliseconds) after the wired communication part 21 transmits the control data to the measurement device 111.

Accordingly, the wireless communication part 22 transmits the measurement data received from the measurement device 111 in response to transmission of the control data to the measurement device 111 by the wired communication part 21. This prevents the wireless communication part 22 from transmitting the measurement data output by the measurement device 111 at the same position and in the same state as at the time of measurement of the immediately preceding measurement data. As a result, the power consumption of the wireless communication apparatus 2 can be reduced, and the data volume of measurement data managed by the management apparatus 4 can be reduced.

The temperature of the wireless communication apparatus 2 may increase due to heat generated by the wireless communication apparatus 2 or the measurement device 111. When the temperature of the wireless communication apparatus 2 increases, the wireless communication apparatus 2 may thermally expand, the function of the wireless communication apparatus 2 may deteriorate, or a usable period of the wireless communication apparatus 2 may be shortened. Accordingly, the temperature control part 261 may suppress an increase in the temperature of the wireless communication apparatus 2 by controlling the temperature of the wireless communication apparatus 2.

In order to enable the temperature control part 261 to control the temperature of the wireless communication apparatus 2, the memory 25 may store an initial temperature that is the temperature of the wireless communication apparatus 2 at a start of measurement of the workpiece W by the measurement device 111 (for example, a temperature of an environment in which the wireless communication apparatus 2 is installed). In order to reduce a coefficient of thermal expansion of the wireless communication apparatus 2, a material constituting the wireless communication apparatus 2 may be CFRP (Carbon Fiber Reinforced Plastics) or the like.

For example, the temperature control part 261 controls the temperature of the wireless communication apparatus 2 such that a difference between the initial temperature of the wireless communication apparatus 2 stored in the memory 25 and the latest temperature of the wireless communication apparatus 2 measured by the temperature sensor 23 included in the wireless communication apparatus 2 is equal to or less than a threshold value. When a temperature difference between the initial temperature and the latest temperature exceeds the threshold value (that is, when the temperature of the wireless communication apparatus 2 increases excessively), the temperature control part 261 may cause the voltage generation part 24 to generate a voltage so that the first temperature change device D1 (see FIG. 2) can perform heat absorption required to reduce the temperature difference to a value equal to or less than the threshold value. The first temperature change device D1 is, for example, a temperature control circuit, a Peltier element, or the like.

Accordingly, the voltage generation part 24 starts to apply a voltage to the first temperature change device D1, and the first temperature change device D1 reduces the temperature of the wireless communication apparatus 2 by absorbing heat generated by the wireless communication apparatus 2 or the measurement device 111. The temperature control part 261 controls the temperature of the wireless communication apparatus 2 in this manner, whereby an increase in the temperature of the wireless communication apparatus 2 is suppressed. As a result, thermal expansion of the wireless communication apparatus 2, a decrease in the function of the wireless communication apparatus 2, or shortening of the usable period of the wireless communication apparatus 2 can be suppressed.

While measurement is being continued, the temperature of the workpiece W may become abnormal, or the number of times the measurement device 111 touches the workpiece W may reach a replacement threshold. Therefore, the wireless communication part 22 may transmit a signal indicating that the value indicated by the one or more pieces of first measurement data satisfies a second condition to the management apparatus 4 via a wireless channel.

The second condition is, for example, a condition indicating that a situation in which measurement by the measurement device 111 should be stopped or a situation in which measurement by the measurement device 111 should be closely monitored by an administrator has occurred. Specifically, the second condition is a condition indicating that the temperature of the workpiece W is equal to or higher than a threshold value, that the number of times the measurement device 111 touches the workpiece W is equal to or higher than the replacement threshold, or the like.

For example, the wireless communication part 22 transmits, to the management apparatus 4 serving as the monitoring apparatus for preventive maintenance, an abnormality signal indicating that the temperature indicated by the one or more pieces of first measurement data is equal to or higher than the threshold value, or a replacement signal indicating that the number of touches calculable from the number of one or more pieces of first measurement data is equal to or higher than a threshold value. As described above, the wireless communication apparatus 2 that can be attached to the existing measurement apparatus 1 can transmit the abnormality signal, the replacement signal, or the like to the management apparatus 4. As a result, preventive maintenance can be easily performed even on a measurement apparatus 1 that does not support preventive maintenance. In addition, even when a large number of measurement apparatuses 1 are installed in a factory, preventive maintenance can be efficiently performed by centrally managing abnormal signals or replacement signals with the management apparatus 4.

### [Process flow executed in the measurement system S]

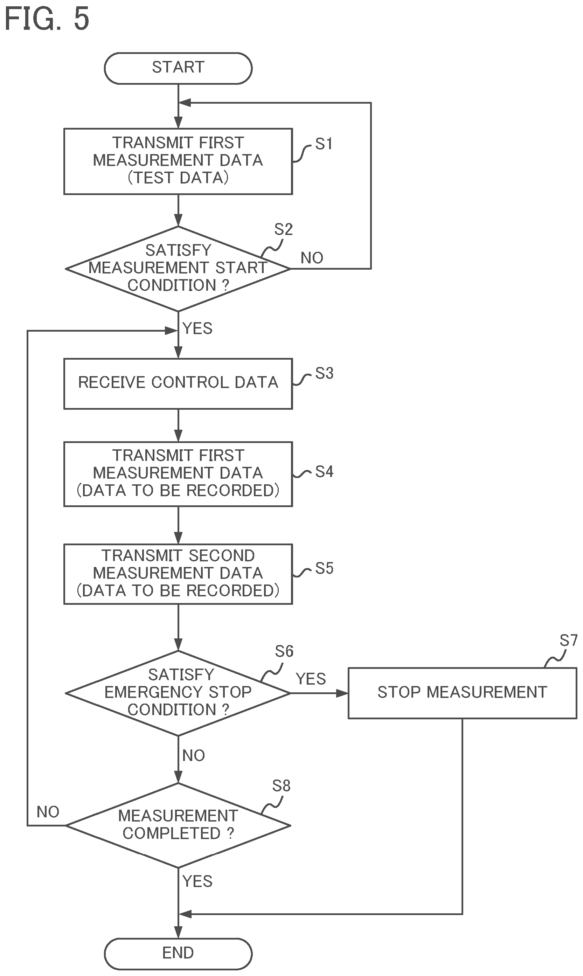

FIG. 5 is a flowchart showing an example of a process flow executed in the measurement system S. The wireless communication part 22 transmits one or more pieces of first measurement data (test data) to the controller 12 via a wireless channel before the measurement device 111 starts measurement of the workpiece W (S1).

The controller 12 that has received the one or more pieces of first measurement data determines whether the one or more pieces of first measurement data satisfy a measurement start condition (a first condition) for starting measurement (S2). If the controller 12 determines that the one or more pieces of first measurement data do not satisfy the measurement start condition (S2: NO), the process returns to S1, and the wireless communication part 22 transmits the next first measurement data to the controller 12. In this way, the wireless communication part 22 repeatedly transmits the one or more pieces of first measurement data until one or more pieces of first measurement data that satisfy the measurement start condition can be transmitted.

On the other hand, if the controller 12 determines that the one or more pieces of first measurement data satisfy the measurement start condition (S2: YES), the wired communication part 21 receives control data for controlling the measurement device 111 from the main body 11 (S3).

The wireless communication part 22 transmits, to the management apparatus 4 via a wireless channel, one or more pieces of first measurement data (data to be recorded) that are received from the measurement device 111 after the wired communication part 21 transmits the control data to the measurement device 111 (S4). In addition, the wired communication part 21 transmits, to the main body 11 via a cable passing through the second coupling portion B2, one or more pieces of second measurement data (data to be recorded) that are received from the measurement device 111 after the wired communication part 21 transmits the control data to the measurement device 111 (S5). The main body 11 may input the received one or more pieces of second measurement data to the controller 12, and the controller 12 may transmit the input one or more pieces of second measurement data to the management apparatus 4.

The management apparatus 4 determines whether at least one of a value indicated by the received first measurement data and a value indicated by the received second measurement data satisfies an emergency stop condition (a second condition) for emergency stop of the measurement (S6). If the management apparatus 4 determines that the value indicated by the measurement data satisfies the emergency stop condition (S6: YES), the controller 12 stops the measurement by the measurement device 111 (S7). As a result, the measurement is terminated before completion.

On the other hand, if the management apparatus 4 determines that the value indicated by the measurement data does not satisfy the emergency stop condition (S6: NO), the controller 12 determines whether all scheduled measurements have been completed (S8). If the controller 12 determines that all measurements have been completed (S8: YES), the measurement ends. On the other hand, if the controller 12 determines that not all measurements have been completed (S8: NO), the process returns to S3, and the wired communication part 21 receives the next control data from the main body 11. In this way, the wired communication part 21 repeats the reception of the control data until all measurements are completed.

### [Effect of the wireless communication apparatus 2]

As described above, the wireless communication part 22 included in the wireless communication apparatus 2 that can be coupled to the existing measurement apparatus 1 can transmit the measurement data output by the measurement device 111 via the wireless channel. As a result, when the user wishes to add types of measurement data that the measurement apparatus 1 can use for measurement, it is not necessary to add a signal line connecting the measurement apparatus 1 and the controller 12. As a result, it becomes easier to increase the number of types of measurement data that the measurement apparatus 1 can use for measurement.

The present disclosure is explained based on the exemplary embodiments. The technical scope of the present disclosure is not limited to the scope explained in the above embodiments and it is possible to make various changes and modifications within the scope of the disclosure. For example, all or part of the apparatus can be configured with any unit which is functionally or physically dispersed or integrated. Further, new exemplary embodiments generated by arbitrary combinations of them are included in the exemplary embodiments. Further, effects of the new exemplary embodiments brought by the combinations also have the effects of the original exemplary embodiments.

With respect to the embodiments including the above examples, the following appended notes are further disclosed.

### (Appended note 1)

A wireless communication apparatus including: a first coupling portion coupled to a measurement device for measuring a workpiece mounted on a measurement apparatus having a function of controlling a position of a mounting portion to which a device for measuring the workpiece is detachably mounted; a second coupling portion coupled to the mounting portion; a wired communication part that receives control data for controlling the measurement device from the measurement apparatus via a cable connected to the second coupling portion; and a wireless communication part that transmits one or more pieces of first measurement data among a plurality of pieces of measurement data output by the measurement device on the basis of the control data via a wireless channel.

### (Appended note 2)

The wireless communication apparatus according to Appended note 1, wherein the wired communication part transmits, to the measurement apparatus, one or more pieces of second measurement data different from the one or more pieces of first measurement data among a plurality of pieces of measurement data via a cable passing through the second coupling portion.

### (Appended note 3)

The wireless communication apparatus according to Appended note 2, wherein the measurement device includes: a geometry sensor that measures a geometry of the workpiece; and a vibration sensor that detects vibration or a temperature sensor that measures temperature, the wired communication part transmits the one or more pieces of second measurement data indicating the geometry of the workpiece measured by the geometry sensor to the measurement apparatus via the cable, and the wireless communication part transmits the one or more pieces of first measurement data indicating vibration detected by the vibration sensor or the one or more pieces of first measurement data indicating temperature measured by the temperature sensor via the wireless channel.

### (Appended note 4)

The wireless communication apparatus according to any one of Appended notes 1 to 3, wherein the wired communication part transmits the control data received from the measurement apparatus to the measurement device, and the wireless communication part transmits, via the wireless channel, the one or more pieces of first measurement data that are received from the measurement device after the wired communication part transmits the control data to the measurement device.

### (Appended note 5)

The wireless communication apparatus according to any one of Appended notes 1 to 4, wherein the wireless communication part transmits the one or more pieces of first measurement data via the wireless channel before the measurement device starts measurement of the workpiece, and the wired communication part receives the control data for instructing the measurement device to start measurement of the workpiece, the control data being transmitted by the measurement apparatus when a value indicated by the transmitted one or more pieces of first measurement data satisfies a first condition, and transmits the received control data to the measurement device.

### (Appended note 6)

The wireless communication apparatus according to any one of Appended notes 1 to 5, further including: a memory that stores an initial temperature that is a temperature of the wireless communication apparatus at a start of measurement of the workpiece by the measurement device; a temperature sensor that measures a temperature of the wireless communication apparatus; and a temperature control part that controls a temperature of the wireless communication apparatus, wherein the temperature control part controls the temperature of the wireless communication apparatus such that a difference between the initial temperature of the wireless communication apparatus and the latest temperature of the wireless communication apparatus measured by the temperature sensor is equal to or less than a threshold value.

### (Appended note 7)

The wireless communication apparatus according to any one of Appended notes 1 to 6, further including: a temperature control part that estimates a future temperature of the measurement device on the basis of electric power supplied to the measurement device, and controls the temperature of the measurement device on the basis of the estimated future temperature so that the temperature of the measurement device reaches a target temperature within a predetermined time.

### (Appended note 8)

The wireless communication apparatus according to Appended note 7, wherein the temperature control part estimates, as the future temperature, a temperature obtained by adding a standard temperature rise, which is a temperature rise of the measurement device in a case where electric power is supplied to the measurement device for the predetermined time obtained by subtracting a power-supply start time at which power is supplied to the measurement device from a measurement start time at which measurement of the work is started, to a temperature of the measurement device at the power-supply start time, and controls the temperature of the measurement device so that the temperature of the measurement device rises, within the predetermined time, by a temperature obtained by subtracting the estimated future temperature from the target temperature, in addition to the standard temperature rise.

### (Appended note 9)

The wireless communication apparatus according to any one of Appended notes 1 to 8, wherein the wireless communication part transmits a signal indicating that a value indicated by the one or more pieces of first measurement data satisfies a second condition to a management apparatus for managing a plurality of the measurement apparatuses via a wireless channel.

### (Appended note 10)

A measurement system including: a plurality of measurement apparatuses each having a wireless communication apparatus mounted thereon; and a management apparatus capable of communicating with the plurality of measurement apparatuses, wherein the measurement apparatus includes: a first coupling portion coupled to a measurement device for measuring a workpiece mounted on the measurement apparatus, the measurement apparatus having a function of controlling a position of a mounting portion to which a device for measuring the workpiece is detachably mounted; a second coupling portion coupled to the mounting portion; a wired communication part that receives control data for controlling the measurement device from the measurement apparatus via a cable connected to the second coupling portion; and a wireless communication part that transmits one or more pieces of first measurement data among a plurality of pieces of measurement data output by the measurement device on the basis of the control data via a wireless channel, and the management apparatus manages a measurement result of the workpiece on the basis of the one or more pieces of first measurement data transmitted from the plurality of the measurement apparatuses.

## Claims

1. A wireless communication apparatus (2) comprising:
a first coupling portion (B1) coupled to a measurement device (111) for measuring a workpiece (W) mounted on a measurement apparatus (1) having a function of controlling a position of a mounting portion (112) to which the device for measuring the workpiece (W) is detachably mounted;
a second coupling portion (B2) coupled to the mounting portion (112);
a wired communication part (21) that receives control data for controlling the measurement device (111) from the measurement apparatus (1) via a cable connected to the second coupling portion (B2); and
a wireless communication part (22) that transmits one or more pieces of first measurement data among a plurality of pieces of measurement data output by the measurement device (111) on the basis of the control data via a wireless channel.

2. The wireless communication apparatus (2) according to claim 1, wherein the wired communication part (21) transmits, to the measurement apparatus (1), one or more pieces of second measurement data different from the one or more pieces of first measurement data among a plurality of pieces of measurement data via a cable passing through the second coupling portion (B2).

3. The wireless communication apparatus (2) according to claim 2, wherein the measurement device (111) includes: a geometry sensor that measures a geometry of the workpiece (W); and a vibration sensor that detects vibration or a temperature sensor (23) that measures temperature,
the wired communication part (21) transmits the one or more pieces of second measurement data indicating the geometry of the workpiece (W) measured by the geometry sensor to the measurement apparatus (1) via the cable, and
the wireless communication part (22) transmits the one or more pieces of first measurement data indicating vibration detected by the vibration sensor or the one or more pieces of first measurement data indicating temperature measured by the temperature sensor (23) via the wireless channel.

4. The wireless communication apparatus (2) according to any one of claims 1 to 3, wherein the wired communication part (21) transmits the control data received from the measurement apparatus (1) to the measurement device (111), and
the wireless communication part (22) transmits, via the wireless channel, the one or more pieces of first measurement data that are received from the measurement device (111) after the wired communication part (21) transmits the control data to the measurement device (111).

5. The wireless communication apparatus (2) according to any one of claims 1 to 4, wherein the wireless communication part (22) transmits the one or more pieces of first measurement data via the wireless channel before the measurement device (111) starts measurement of the workpiece (W), and
the wired communication part (21) receives the control data for instructing the measurement device (111) to start measurement of the workpiece (W), the control data being transmitted by the measurement apparatus (1) when a value indicated by the transmitted one or more pieces of first measurement data satisfies a first condition, and transmits the received control data to the measurement device (111).

6. The wireless communication apparatus (2) according to any one of claims 1 to 5, further comprising:
a memory (25) that stores an initial temperature that is a temperature of the wireless communication apparatus (2) at a start of measurement of the workpiece (W) by the measurement device (111);
a temperature sensor (23) that measures a temperature of the wireless communication apparatus (2); and
a temperature control part (261) that controls a temperature of the wireless communication apparatus (2), wherein
the temperature control part (261) controls the temperature of the wireless communication apparatus (2) such that a difference between the initial temperature of the wireless communication apparatus (2) and a latest temperature of the wireless communication apparatus (2) measured by the temperature sensor is equal to or less than a threshold value.

7. The wireless communication apparatus (2) according to any one of claims 1 to 6, further comprising:
a temperature control part (261) that estimates a future temperature of the measurement device (111) on the basis of electric power supplied to the measurement device (111), and controls a temperature of the measurement device (111) on the basis of the estimated future temperature so that the temperature of the measurement device (111) reaches a target temperature within a predetermined time.

8. The wireless communication apparatus (2) according to claim 7, wherein the temperature control part (261) estimates, as the future temperature, a temperature obtained by adding a standard temperature rise, which is a temperature rise of the measurement device (111) in a case where electric power is supplied to the measurement device (111) for the predetermined time obtained by subtracting a power-supply start time at which power is supplied to the measurement device (111) from a measurement start time at which measurement of the work is started, to a temperature of the measurement device (111) at the power-supply start time, and controls the temperature of the measurement device (111) so that the temperature of the measurement device (111) rises, within the predetermined time, by a temperature obtained by subtracting the estimated future temperature from the target temperature, in addition to the standard temperature rise.

9. The wireless communication apparatus (2) according to any one of claims 1 to 8, wherein the wireless communication part (22) transmits a signal indicating that a value indicated by the one or more pieces of first measurement data satisfies a second condition to a management apparatus (4) for managing a plurality of the measurement apparatuses (1) via a wireless channel.

10. A measurement system comprising:
a plurality of measurement apparatuses (1) each having a wireless communication apparatus (2) mounted thereon; and
a management apparatus (4) capable of communicating with the plurality of measurement apparatuses (1), wherein the measurement apparatus (1) includes:
a first coupling portion (B1) coupled to a measurement device (111) for measuring a workpiece (W) mounted on the measurement apparatus (1), the measurement apparatus having a function of controlling a position of a mounting portion (112) to which a device for measuring the workpiece (W) is detachably mounted;
a second coupling portion (B2) coupled to the mounting portion (112);
a wired communication part (21) that receives control data for controlling the measurement device (111) from the measurement apparatus (1) via a cable connected to the second coupling portion (B2); and
a wireless communication part (22) that transmits one or more pieces of first measurement data among a plurality of pieces of measurement data output by the measurement device (111) on the basis of the control data via a wireless channel, and
the management apparatus (4) manages a measurement result of the workpiece on the basis of the one or more pieces of first measurement data transmitted from the plurality of the measurement apparatuses (1).
